# EUROPEAN PATENT SPECIFICATION

(11) **EP 2 302 296 B1**
(45) Date of publication and mention of the grant of the patent: **06.11.2013**
(21) Application number: 10177235.8
(22) Date of filing: 16.09.2010
(51) Int. Cl.: F21V 15/01, F21V 19/00, B60Q 1/00

(54) **Automotive lighting device with an improved lamp mounting cover**
Fahrzeugleuchte mit einem verbessertem Lampendeckel
Lampe de véhicule avec couvercle amélioré

(30) Priority: 16.09.2009 IT TO20090703
(43) Date of publication of application: 30.03.2011
(73) Proprietor: Automotive Lighting Italia S.p.A., 10078 Venaria Reale (Torino) (IT)
(72) Inventor: Cubito, Luciano, 10135, Torino (IT); Lucia, Gaetano Roberto, 10078, Venaria Reale (IT)
(74) Representative: Bergadano, Mirko

(56) References cited:
- DE-A1- 3 132 440
- DE-A1- 19 516 544
- GB-A- 1 355 947

## Description

The invention relates to an automotive lighting device, such as a headlight or lamp, having a cup-shaped body closed at the back by a closing cover for the lamp mounting seat, which cover is removably coupled to the body by means of an improved coupling system.

Automotive headlights generally comprise a cup-shaped body closed at the front by a lens and provided at the back with one or more mounting seats for an equal number of lamps or other light sources; the lamp mounting seat is generally fluid-tightly closed by a cap-shaped cover, which is to be removed to assemble/replace the lamp or in all cases to carry out maintenance interventions inside the headlight, and then reassembled.

For this purpose, according to DE3132440A1, DE19516544A1 and GB1355947 the headlight is provided with systems for coupling the cover to the cup-shaped body comprising bayonet fasteners obtained in the lamp mounting seat which are engaged in use by respective teeth provided with undercuts which overhangingly protrude from the front of the cover.

However, the lack of space in current engine compartments often make removing and assembling the cupshaped cover difficult, also because of the presence of a peripheral seal arranged between the cover and the lamp mounting seat of the cup-shaped body. Therefore, only one or more of the teeth may actually be engaged in the respective bayonet fasteners of the seat, thus determining an incomplete assembly of the cap-shaped cover which may be either difficult or impossible to be detected. Such an incomplete assembly determines the failure of the fluid-tight closure, which may cause in use the introduction of fluids or fumes into the headlight; these may opacify or deteriorate the optical parts of the headlight, with consequent decay of lighting performance.

It is thus an object of the present invention to obviate such a drawback by providing an automotive lighting device (headlight or lamp or else), where the possible incomplete assembly of the cover may either be easily detected or completely prevented thus determining, in case of incorrect or failed coupling of even only one tooth of the cover and the respective bayonet fastener of the seat, the impossibility of firmly coupling the cup-shaped body and the cover, this all while keeping a coupling system which is simple, quick, and compact.

The invention thus relates to an automotive lighting device, such as a headlight or lamp, as defined in claim 1.

In particular, the automotive lighting device according to the invention comprises a cup-shaped body for accommodating at least one light source, closed at the front by a lens and provided at the back with at least one mounting seat for the light source, fluid-tightly closed in use by a cover removably coupled to the body by means of a coupling system comprising, in turn, at least one pair (usually three or more) of teeth overhangingly protruding at the front from the cover, towards the seat, and shaped so as to form respective undercuts in a direction transversal to the overhanging extension direction of the teeth, adapted to couple with respective bayonet fasteners of the seat.

According to an aspect of the invention, the teeth overhangingly extend from the cover and towards the seat beyond the respective undercuts and are each provided with a continuous ridge extending in the same transversal direction as the undercut and over a stretch of the tooth between a free end thereof and the undercut.

In particular, the length of the teeth in the overhanging extension direction thereof from the cover is such that, if even only one tooth fails to be coupled, the ridge and the free end of the latter interfere with the respective bayonet fastener of the seat, to an extent such that the cover is forced to arrange itself askew with respect to the seat at such an angle to visually indicate the failed coupling and/or to totally prevent a firm coupling between cover and body.

Thereby, by simply improving the shape of the cover teeth, if a tooth fails to be coupled, the other teeth may neither be coupled and the cover may be correctly and firmly mounted only when all teeth are coupled. If even one tooth only is not correctly coupled to the respective bayonet fastener of the seat, the cap-shaped cover of the lighting device according to the invention is not able to remain, even partially, in contact with the body seat and falls by gravity. Furthermore, the failed coupling of one or more teeth would be more visible or however detectable by the user's touch, and this also in the presence of an outer water protection collar about the lamp mounting seat.

Further features and advantages of the invention will become apparent from the following description of an absolutely non-limitative and merely exemplary embodiment thereof, with reference to the figures in the accompanying drawings, in which:
- figure 1 diagrammatically shows a longitudinal, partially section view of a lighting device with an improved cover made according to the invention, where the cover is shown in an incorrect assembly position;
- figures 2 and 3 show longitudinal and three-quarters, perspective front views of the improved cover of the device in figure 1, on enlarged scale; and
- figure 4 diagrammatically shows a perspective view, with the novel part of the cover being shown by a dashed line, of the assembly of the cover on the body of the lighting device at a lamp mounting seat thereof.

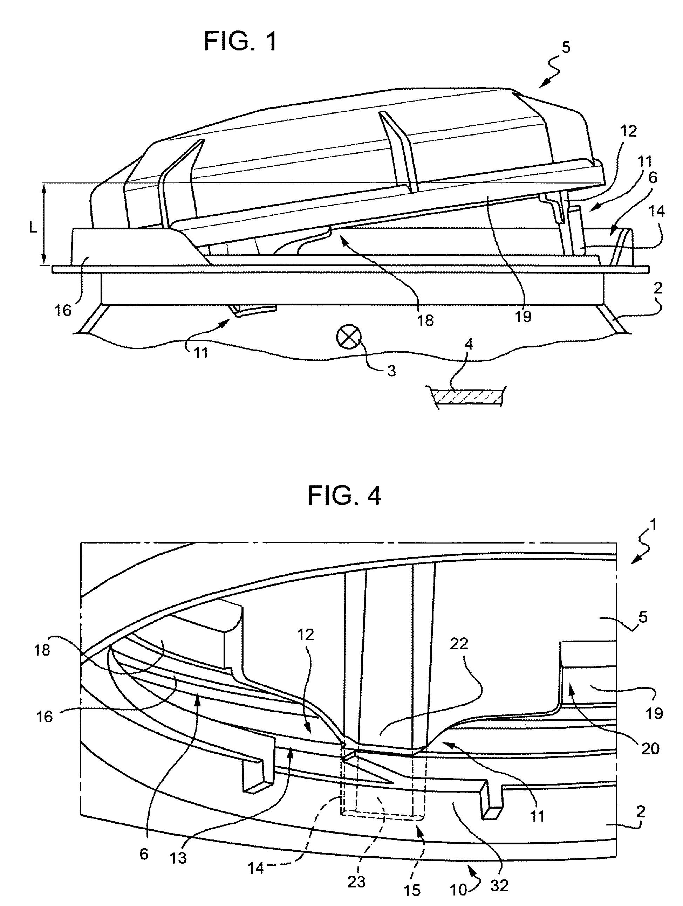

With reference to figures from 1 to 4, numeral 1 indicates as a whole an automotive lighting devices, such as a headlight or lamp, comprising a cup-shaped body 2 (known and only diagrammatically and partiallly shown for simplicity), a light source consisting of a lamp 3 accommodated in use and in a known manner within the cup-shaped body 2, a lens 4 which closes the cup-shaped body 2 from the front, and a cover 5 which is mounted at the back of the cup-shaped body 2 to close a mounting seat 6 (shown in greater detail in figure 4) for a lamp or light source 3.

Cover 5 fluid-tightly closes seat 6 in use, being removably coupled to body 2 by means of a coupling system indicated as a whole by numeral 10 (figure 4), comprising in turn at least one pair (usually more than three or more) of teeth 11, overhangingly protruding at the front of cover 5, towards seat 6, and shaped so as to form respective undercuts 12 in a direction traversal to the overhanging extension direction of the teeth 11, adapted to couple with the respective bayonet fasteners 13 of seat 6, of type known per se and which therefore are not described in detail for simplicity.

According to the main aspect of the invention, the teeth 11 overhangingly extend from cover 5 and towards seat 6 beyond the respective undercuts 12, and are each provided with a continuous ridge 14 extending in the same transversal direction as the undercut 12 and over a stretch of the tooth 11 between a free end 15 thereof and the undercut 12.

Therefore, according to the invention, the teeth 11 are longer than the similar teeth of the known lighting devices, which normally end at the undercuts 12, and additionally have the ridge 14 acting as a fail-safe element during the step of coupling (as disclosed below). In particular, the length of the teeth 11 in their overhangingly extension direction from the cover 5 is such that, if a tooth 11 fails to be coupled, the ridge 14 and the free end 15 of such a tooth 11 interfere with the respective bayonet fastener 13 of seat 6 to an extent such that cover 5 (figure 1) is forced to be arranged askew with respect to seat 6 at such an angle to visually indicate the failed coupling, e.g. because a wider gap L is determined (the width is larger than the height of a possible outer water protection collar 16 integrally carried in one piece with the body 2 arranged about the lamp mounting seat 6) and/or to prevent a firm coupling between cover 5 and body 2.

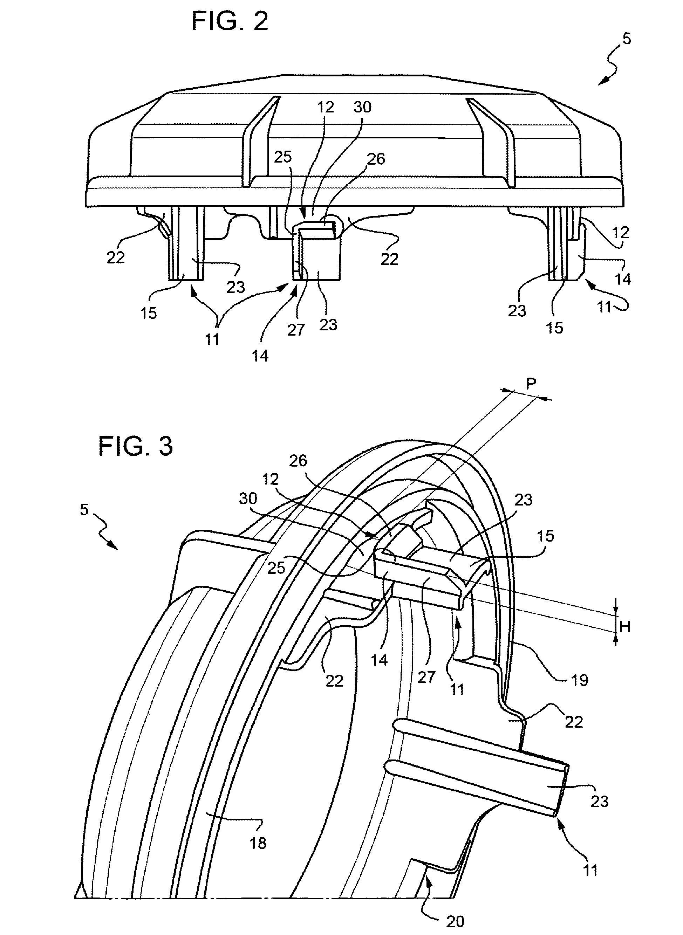

In the preferred embodiment shown, cover 5 is shaped as an axial symmetry cap, and teeth 11 axially and overhangingly protrude from a first, radially inner circular edge 18 of cover 5 (figure 3), surrounded by a second, radially outer circular edge 19 of cover 5; a seat 20 for accommodating a seal (known and not shown) sandwiched in use between cover 5 and seat 6 is further defined between the first edge 18 and the second edge 19 on cover 5.

With particular reference to figures 2 and 3, undercut 12 and ridge 14 of each tooth 11 radially extend outwards with respect to the first edge 18 of the cover, i.e. towards the second edge 19. Moreover, ridge 14 extends in the axial direction to occupy the whole length of each tooth 11, except for a stretch thereof between the undercut 12 and the edge 18, which thus remains free for coupling (operation ocurring in a known manner) with the bayonet fastener corresponding to the seat 6, obtained integral in one piece with body 2.

The ridge 14 of each tooth 11 has in the radial direction a height H equal to the depth P, measured in the same direction, of the undercut 12 of the same tooth 11, because each tooth 11 is defined by a curved fin which axially and overhangingly extends from the edge 18, thus circumferentially following the contour thereof, and which has a circumferentially larger base portion 22, and a circumferentially narrower end portion 23; and because the undercut 12 and the ridge 14 of each tooth are defined by an L-shaped rib 25, radially extending from the curved fin 11, between the base portion 22 and the end portion 23 and along the whole length of the latter.

The L-shaped rib 25 comprises a first wing 26 extending in the circumferential direction and defining the undercut 12, and a second wing 27 extending in the axial direction and defining the ridge 14.

Over the base portion 22, the fin defining each tooth 11 preferably carries radially outside at least one first centering rib 30 for the cover 5 having a cylindrical contour and circumferentially arranged at the first wing 26 of the L-shaped rib 25, axially comprised between the latter and the edges 18, 19 of cover 5.

According to a preferred aspect of the invention, on the portion base 22, the fin defining each tooth 11 carries radially outside at least one second centering rib 31 for the cover 5, having a cylindrical contour and being arranged so as to be circumferentially offset with respect to the first wing 26 of the L-shaped rib 25 and to the end portion 23 of fin 11 as well, extending parallel to the second wing 27 of rib 25, which second wing defines ridge 14.

The centering ribs 30 and 31 are designed to cooperate in use with a cylindrical, inner side surface 32 (figure 4) of the seat 6 of the cup-shaped body 2, at which the bayonet fasteners 13 of seat 6 are obtained on the cup-shaped body.

In use, if the teeth 11 are all correctly arranged with respect to the bayonet fasteners 13, ridges 14 slide along the surface 32 and are placed under the fasteners 13, thus allowing the undercuts 12 to engage the latter by imparting a rotation to cover 5; cover 5 is so fixed to the cup-shaped body 2, thus fluid-tightly closing seat 6.

However, if even only one of the teeth 11 is not correctly positioned, e.g. because cover 5 is either laterally moved or inclined, ridge 14 interferes with the corresponding fastener 13 facing the same in that moment, thus preventing cover 5 from rotating and then locking it over body 2. Furthermore, the greater length of tooth 11, equal to the whole axial extension of portion 23, puts the cover 5 so as to be transversal and inclined to be askew with respect to seat 6, thus revealing the failed coupling by means of gap L.

## Claims

1. An automotive lighting device (1), such as a headlight or lamp, comprising a cup-shaped body (2) for accommodating at least one light source (3) closed at the front by a lens (4) and provided at the back with at least one mounting seat (6) for the light source fluid-tightly closed in use by a cover (5) removably coupled to the body (2) by means of a coupling system (10) comprising, in turn, at least one pair of teeth (11) overhangingly protruding at the front from the cover (5), towards the seat, and shaped so as to form respective undercuts (12) in a direction transversal to the overhanging extension direction of the teeth, adapted to couple with respective bayonet fasteners (13) of the seat; **characterized in that** the teeth (11) overhangingly extend from the cover (5) and towards the seat (6) beyond the respective undercuts (12) and are each provided with a continuous ridge (14) extending in the same transversal direction as the undercut (12) and over a stretch of the tooth (11) between a free end (15) thereof and the undercut (12).

2. A lighting device according to claim 1, **characterized in that** the length of the teeth (11) in their direction of overhanging extension from the cover (5) is such that, if a tooth (11) fails to be coupled, the ridge (14) and the free end (15) of the latter interfere with the respective bayonet coupling (13) of the seat (6) so that the cover (5) is forced to arrange to be askew with respect to the seat (6) at an angle such as to visually indicate the failed coupling and/or to prevent a firm coupling between the cover (5) and the body (2).

3. A lighting device according to claim 1 or 2, **characterized in that** said cover (5) is shaped as an axial symmetry cap, said teeth (11) axially and overhangingly protruding from a first, radially inner circular edge (18) of the cover, surrounded by a second, radially outer edge (19) of the cover, a seat (20) for accommodating a seal being defined on the cover between the first and second edges.

4. A lighting device according to claim 3, **characterized in that** said undercut (12) and said ridge (14) of each tooth radially extend outward with respect to the first edge (18) of the cover, the ridge (14) further extending in an axial direction to occupy the whole length of the tooth (11) except for one section between the undercut (12) and said first edge (18).

5. A lighting device according to claim 3 or 4, **characterized in that** in the radial direction, said ridge (14) has the height (H) equal to the depth (P) of said undercut (12) in the same direction.

6. A lighting device according to one of claims from 3 to 5, **characterized in that** each said tooth (11) is defined by a curved fin overhangingly and axially extending from said first edge (12), circumferentially following the contour thereof and having a circumferentially wider base portion (22), and a circumferentially narrower end portion (23); said undercut (12) and ridge (14) being defined by an L-shaped rib (25) which radially extends from the curved fin (11), between the base portion (22) and along the whole end portion (23), the L-shaped rib (25) comprising a first wing (26), which extends in the circumferential direction and defines said undercut (12), and a second wing (27) which extends in the axial direction and defines said ridge (14).

7. A lighting device according to claim 6, **characterized in that** said fin (11) radially and externally carries on said base portion (22) at least one first centering rib (30) for the cover having the cylindrical contour and circumferentially arranged at the first wing (26) of the L-shaped rib, axially comprised between the latter and said first and second edges (18,19) of the cover.

8. A lighting device according to claim 6 or 7, **characterized in that** said fin (11) radially externally carries on said base portion (22) at least one second centering rib (31) for the cover having the cylindrical contour and circumferentially arranged so as to be offset to the first wing (26) of the L-shaped rib and to said end portion (23) of the wing, and which extends parallelly to the second wing (27) of the rib (25), defining said ridge (14).

9. A lighting device according to claims 7 and 8, **characterized in that** said first and second centering ribs (30, 31) cooperate in use with an inner cylindrical lateral surface (32) of said seat (6) of the cup-shaped body (2), at which said bayonet couplings (13) of the seat are obtained on the cup-shaped body.

## Patentansprüche

1. Fahrzeugleuchte (1), insbesondere Scheinwerfer, mit einem napfförmigen Körper (2) zum Aufnehmen mindestens einer Lichtquelle (3), an der Vorderseite durch eine Streuscheibe (4) abgeschlossen und an der Rückseite mit mindestens einem Montagesitz (6) für die Lichtquelle versehen, im Einsatz durch einen an den Körper (2) mittels eines Kopplungssystems (10) entfernbar gekoppelten Deckel (5) fluiddicht abgeschlossen, das seinerseits mindestens ein Paar Zähne (11) aufweist, die an der Vorderseite von dem Deckel (5) überhängend in Richtung des Sitzes vorspringen und so geformt sind, dass sie entsprechende Hinterschneidungen (12) in einer Richtung quer zur Richtung der überhängenden Verlängerung der Zähne bilden, angepasst, an entsprechende Bajonettbefestigungen (13) des Sitzes gekoppelt zu werden; **dadurch gekennzeichnet, dass** die Zähne (11) vom Deckel (5) überhängend und in Richtung des Sitzes (6) über die entsprechenden Hinterschneidungen (12) hinweg verlaufen und jeweils mit einem durchgängigen Grat (14), der in derselben Querrichtung wie die Hinterschneidung (12) und über eine Strecke des Zahns (11) zwischen einem freien Ende (15) davon und der Hinterschneidung verläuft, versehen sind.

2. Leuchte nach Anspruch 1, **dadurch gekennzeichnet, dass** die Zähne (11) in ihrer Richtung der überhängenden Verlängerung von dem Deckel (5) eine Länge haben dergestalt, dass, wenn ein Zahn (11) nicht gekoppelt wird, der Grat (14) und das freie Ende (15) des Letzteren die entsprechende Bajonettkupplung (13) des Sitzes (6) so überlagern, dass der Deckel (5) gezwungen wird, sich in einem solchen Winkel schräg zum Sitz (6) einzurichten, dass die nicht zustande gekommene Kopplung sichtbar angezeigt wird und/oder eine feste Kopplung zwischen dem Deckel (5) und dem Körper (2) verhindert wird.

3. Leuchte nach Anspruch 1 oder 2, **dadurch gekennzeichnet, dass** der Deckel (5) wie eine achsensymmetrische Kappe geformt ist, wobei die Zähne (11) axial und überhängend von einer ersten, radial inneren, kreisförmigen Kante (18) des Deckels, umgeben von einer zweiten, radial äußeren Kante (19) des Deckels, vorspringen, wobei ein Sitz (20) zum Aufnehmen einer Dichtung auf dem Deckel zwischen der ersten und der zweiten Kante festgelegt wird.

4. Leuchte nach Anspruch 3, **dadurch gekennzeichnet, dass** die Hinterschneidung (12) und der Grat (14) jedes Zahns radial auswärts in Bezug auf die erste Kante (18) des Deckels verlaufen, wobei der Grat (14) weiter in eine axiale Richtung verläuft, um die gesamte Länge des Zahns (11) mit Ausnahme eines Abschnitts zwischen der Hinterschneidung (12) und der ersten Kante (18) einzunehmen.

5. Leuchte nach Anspruch 3 oder 4, **dadurch gekennzeichnet, dass** der Grat (14) in der radialen Richtung eine Höhe (H) besitzt, die gleich der Tiefe (P) der Hinterschneidung (12) in derselben Richtung ist.

6. Leuchte nach einem der Ansprüche 3 bis 5, **dadurch gekennzeichnet, dass** jeder Zahn (11) durch eine gekrümmte Lamelle festgelegt wird, die überhängend und axial von der ersten Kante (12) verläuft, in Umfangsrichtung ihrem Profil folgt und einen in Umfangsrichtung breiteren Basisabschnitt (22) und einen in Umfangsrichtung schmaleren Endabschnitt (23) besitzt; wobei die Hinterschneidung (12) und der Grat (14) durch eine L-förmige Rippe (25) festgelegt werden, die von der gekrümmten Lamelle (11), zwischen dem Basisabschnitt (22) und entlang dem gesamten Endabschnitt (23) verläuft, wobei die L-förmige Rippe (25) einen ersten Flügel (26), der in die Umfangsrichtung verläuft und die Hinterschneidung (12) festlegt, und einen zweiten Flügel (27), der in die axiale Richtung verläuft und den Grat (14) festlegt, aufweist.

7. Leuchte nach Anspruch 6, **dadurch gekennzeichnet, dass** die Lamelle (11) radial und außen auf dem Basisabschnitt (22) mindestens eine erste zentrierende Rippe (30) für den Deckel, die das zylindrische Profil besitzt und in Umfangsrichtung am ersten Flügel (26) der L-förmigen Rippe angeordnet ist, axial zwischen Letzterer und der ersten und der zweiten Kante (18, 19) des Deckels befindlich, trägt.

8. Leuchte nach Anspruch 6 oder 7, **dadurch gekennzeichnet, dass** die Lamelle (11) radial außen auf dem Basisabschnitt (22) mindestens eine zweite zentrierende Rippe (31) für den Deckel trägt, die das zylindrische Profil besitzt und in Umfangsrichtung so angeordnet ist, dass sie zu dem ersten Flügel (26) der L-förmigen Rippe und zu dem Endabschnitt (23) des Flügels versetzt ist, und die parallel zum zweiten Flügel (27) der Rippe (25) verläuft, wodurch der Grat (14) festgelegt wird.

9. Leuchte nach den Ansprüchen 7 und 8, **dadurch gekennzeichnet, dass** die erste und die zweite zentrierende Rippe (30, 31) im Einsatz mit einer inneren, zylindrischen, seitlichen Oberfläche (32) des Sitzes (6) des napfförmigen Körpers (2) zusammenwirken, wobei die Bajonettkupplungen (13) des Sitzes auf dem napfförmigen Körper erhalten werden.

## Revendications

1. Dispositif d'éclairage de véhicule automobile (1), tel qu'un phare ou une lampe, comprenant un corps en forme de coupelle (2) destiné à recevoir au moins une source de lumière (3), fermé à l'avant par une lentille (4) et pourvu à l'arrière d'au moins un siège de fixation (6) de la source de lumière, fermé en utilisation de manière étanche aux fluides par un couvercle (5) couplé de manière amovible au corps (2) au moyen d'un système d'accouplement (10), lequel comprend au moins une paire de dents (11) faisant saillie en porte-à-faux du couvercle (5) à l'avant, en direction du siège, et est configuré pour former des dégagements (12) respectifs dans une direction transversale à la direction d'extension en porte-à-faux des dents, adapté pour s'accoupler à des fixations à baïonnette (13) respectives du siège; **caractérisé en ce que** les dents (11) s'étendent en porte-à-faux à partir du couvercle (5) et vers le siège (6) au-delà des dégagements (12) respectifs et sont pourvues chacune d'une arête continue (14) s'étendant dans la même direction transversale que le dégagement (12) et sur une étendue de la dent (11) entre une extrémité libre (15) de celle-ci et le dégagement (12).

2. Dispositif d'éclairage selon la revendication 1, **caractérisé en ce que** la longueur des dents (11) dans leur direction d'extension en porte-à-faux à partir du couvercle (5) est telle que, si une dent (11) ne réussit pas à s'accoupler, l'arête (14) et l'extrémité libre (15) de celle-ci interfèrent avec l'accouplement à baïonnette (13) respectif du siège (6) de sorte que le couvercle (5) est contraint de se mettre en travers par rapport au siège (6) à un angle permettant d'indiquer visuellement l'accouplement manqué et/ou d'empêcher un accouplement ferme entre le couvercle (5) et le corps (2).

3. Dispositif d'éclairage selon la revendication 1 ou 2, **caractérisé en ce que** ledit couvercle (5) est configuré sous la forme d'un chapeau à symétrie axiale, lesdites dents (11) faisant saillie axialement et en porte-à-faux d'un premier bord (18) circulaire, radialement intérieur, du couvercle, entouré par un second bord (19) radialement extérieur du couvercle, un siège (20) destiné à recevoir un joint étant défini sur le couvercle entre les premier et second bords.

4. Dispositif d'éclairage selon la revendication 3, **caractérisé en ce que** ledit dégagement (12) et ladite arête (14) de chaque dent s'étendent radialement vers l'extérieur par rapport au premier bord (18) du couvercle, l'arête (14) se prolongeant de plus dans une direction axiale pour occuper toute la longueur de la dent (11), sauf une section entre le dégagement (12) et ledit premier bord (18).

5. Dispositif d'éclairage selon la revendication 3 ou 4, **caractérisé en ce que**, dans la direction radiale, la hauteur (H) de ladite arête (14) est égale à la profondeur (P) dudit dégagement (12) dans la même direction.

6. Dispositif d'éclairage selon l'une des revendications 3 à 5, **caractérisé en ce que** chaque dite dent (11) est définie par une ailette incurvée s'étendant en porte-à-faux et axialement à partir dudit premier bord (12), suivant circonférentiellement le contour de celui-ci et présentant une partie de base (22) circonférentiellement plus large et une partie d'extrémité (23) circonférentiellement plus étroite; ledit dégagement (12) et ladite arête (14) étant définis par une nervure (25) en L qui s'étend radialement depuis l'ailette (11) incurvée, entre la partie de base (22) et toute la partie d'extrémité (23), la nervure en L (25) comprenant une première aile (26) qui s'étend dans la direction circonférentielle et définit ledit dégagement (12), et une seconde aile (27) qui s'étend dans la direction axiale et définit ladite arête (14).

7. Dispositif d'éclairage selon la revendication 6, **caractérisé en ce que** ladite ailette (11) porte radialement et extérieurement, sur ladite partie de base (22), au moins une première nervure de centrage (30) du couvercle, ayant un contour cylindrique et disposée circonférentiellement au niveau de la première aile (26) de la nervure en L, située axialement entre cette dernière et lesdits premier et second bords (18, 19) du couvercle.

8. Dispositif d'éclairage selon la revendication 6 ou 7, **caractérisé en ce que** ladite ailette (11) porte radialement et extérieurement, sur ladite partie de base (22), au moins une seconde nervure de centrage (31) du couvercle, ayant un contour cylindrique et disposée circonférentiellement de manière à être décalée par rapport à la première aile (26) de la nervure en L et à ladite partie d'extrémité (23) de l'aile, et qui s'étend parallèlement à la seconde aile (27) de la nervure (25), définissant ladite arête (14).

9. Dispositif d'éclairage selon les revendications 7 et 8, **caractérisé en ce que** lesdites première et seconde nervures de centrage (30, 31) coopèrent en utilisation avec une surface latérale cylindrique intérieure (32) dudit siège (6) du corps en forme de coupelle (2), au niveau de laquelle lesdits accouplements à baïonnette (13) du siège sont formés sur le corps en forme de coupelle.
